Europäisches Patentamt

European Patent Office

Office européen des brevets

(19)

(11) Veröffentlichungsnummer : **0 021 029**
**B1**

(12) **EUROPÄISCHE PATENTSCHRIFT**

(45) Veröffentlichungstag der Patentschrift :
24.11.82

(21) Anmeldenummer : 80102777.2

(22) Anmeldetag : 20.05.80

(51) Int. Cl.³ : **F 16 K 47/02**

(54) **Ventil mit geräuschdämmenden Einbauten.**

(30) Priorität : 07.06.79 DE 2923074

(43) Veröffentlichungstag der Anmeldung :
07.01.81 (Patentblatt 81/01)

(45) Bekanntmachung des Hinweises auf die Patenterteilung : 24.11.82 Patentblatt 82/47

(84) Benannte Vertragsstaaten :
AT CH FR GB IT LI NL SE

(56) Entgegenhaltungen :
DE A 1 675 457
DE A 2 123 914
DE A 2 356 327
DE A 2 417 376
DE A 2 436 042
DE A 2 622 179
DE B 1 600 866
DE B 2 614 063
FR A 2 105 910
US A 2 976 887
US A 3 704 857

(73) Patentinhaber : Feldmühle Aktiengesellschaft
Fritz-Vomfelde-Platz 4
D-4000 Düsseldorf 11 (DE)

(72) Erfinder : von Borries, Horst
An der Lunie 2
D-4150 Krefeld 29 (DE)
Erfinder : Rittel, Hans-Gerd
Max Eyth-Strasse 53
D-7317 Wendlingen (DE)

(74) Vertreter : Uhlmann, Hans, Dr. rer. nat., Dipl.-Chem.
Gladbacher Strasse 189
D-4060 Viersen 1 (DE)

Ventil mit geräuschdämmenden Einbauten

Die Erfindung betrifft ein Ventil, bei dem die Steuerung eines oder mehrerer Flüssigkeitsströme durch ständig miteinander in Eingriff stehende, mindestens eine Ein- und eine Auslaßöffnung aufweisende, Ventilplatten erfolgt, denen eine Umlenk- oder Mischkammer zugeordnet ist, die einen geräuschdämpfenden Körper enthält.

Ventile, die mit Ventilplatten ausgerüstet sind, um die Abgabe einer Flüssigkeitsmenge zu regeln, oder die Abgabe einer Mischung von zwei oder mehr Flüssigkeitsmengen zu ermöglichen und das Mischungsverhältnis zu regeln, sind seit Jahrzehnten bekannt. Die zum Einsatz kommenden Ventilplatten sind planparallele Scheiben, die einer Feinstbearbeitung unterworfen wurden, um so eine absolute Planlage und ein dichtes Abschließen zu gewähren. Sie bestanden ursprünglich aus widerstrandsfähigen Metallen und werden heute meist aus hochwertiger Sinteroxidkeramik ausgeführt. Im allgemeinen ist eine Scheibe stationär angeordnet, d.h. wird gegen Rotation gesichert in einem Gehäuse verankert. Auf ihr gleitet eine weitere Scheibe, wobei die Gleitbewegung so gesteuert werden kann, daß sich in der Stationärscheibe befindliche Öffnungen für den Wasserzu- bzw. auch Wasserablauf mit in der zweiten beweglichen Scheibe, der sogenannten Steuerscheibe, befindlichen Öffnungen in Deckung bringen lassen. Bei Regulierventilen, also bei Ventilen, bei denen nicht mehrere Flüssigkeitsströme miteinander gemischt werden müssen, sondern nur die Menge des durchtretenden Wassers geregelt wird, ist der Ventilsteuerscheibe meist eine Umlenkkammer zugeordnet. Diese Umlenkkammer kann sich direkt in der Ventilsteuerscheibe befinden und dient der Richtungsänderung des Wasserstromes, der im Normalfall von unten durch die stationäre Ventilsitzscheibe aufsteigt, um im allgemeinen 90° oder 180° umgelenkt zu werden.

Dieselbe Umlenkfunktion wird auch bei Mischventilen benötigt. Zusätzlich ist es hierbei jedoch erforderlich, daß außer der Mengeregulierung des Wassers eine Temperaturregulierung des Wassers vorgenommen werden kann, d.h. daß die Eintrittöffnungen der Ventilsitzscheibe für Heiß- und Kaltwasser unterschiedlich weit geöffnet, bzw. abgedeckt werden müssen. Aus beiden Öffnungen strömt damit, falls gemischtes Wasser entnommen werden soll, also ein Wasser, das eine höhere Temperatur als das Kaltwasser oder eine niedrigere Temperatur als das Heißwasser aufweist, Wasser in die Umlenkkammer, die in diesem Falle als Mischkammer bezeichnet wird, weil hierin der Mischvorgang stattfindet.

Wie bei allen Ventilen, so treten auch bei den mit Ventilplatten ausgerüsteten Ventilen durch die sich mit der Strömungsmenge ändernden Strömungsverhältnissen Schwingungen auf, die zu Geräuschen führen, wobei diese Geräuschentwicklung sehr stark sein kann. Diese Geräuschentwicklung ist besonders im Bereich der Sanitärarmaturen unerwünscht, weil beispielsweise eine Brausebatterie oder eine Wannenfüllbatterie auch nachts betätigt werden können muß, ohne daß der dadurch entstehende Geräuschpegel angrenzende Bewohner eines Hauses stört.

Um diese Geräusche möglichst weitgehend zu reduzieren, ist bereits mit der DE-A-19 65 118 vorgeschlagen worden, die Geräuschdämpfung durch Einbringung eines Stufenrandes in die Steuerplatte des Ventiles zu reduzieren. Das Ventil besteht in diesem Falle aus im wesentlichen zwei Ventilplatten, wobei die als Steuerplatte bezeichnete Ventilplatte eine Umlenkkammer aufweist in der der treppenförmige Rand angeordnet ist. Man versprach sich von dieser Anordnung eine Durchwirbelung des aus der Ventilsitzplattenöffnung austretenden Wasserstromes und dadurch eine Dämpfung der auftretenden Geräusche. Die Praxis ergab jedoch, daß diese Geräuschdämpfung nicht so weitgehend ist, daß mit ihr eine merkliche Reduzierung der Geräuschbelästigung erzielt werden konnte. Dieselbe Idee liegt der DE-A-26 58 024 zugrunde, bei der die Bodenfläche der Mischkammer profiliert ist, wodurch auch hier eine Wirbelbildung auftritt. Auch die dabei erreichte Geräuschreduzierung ist ungenügend.

Mit der DE-A-22 30 174 wird gefordert, daß die Summe der Einlaßquerschnitte mindestens gleich dem Auslaßquerschnitt ist, um durch den dadurch erzielten Wasserstau zu einer Geräuschdämmung zu kommen. Auch dieser Vorschlag bringt nur eine unvollkommene Lösung des Problems, weil gerade der kritische Geräuschbereich sich dann bemerkbar macht, wenn das Ventil nur geringfügig geöffnet ist. Der sich dabei bildende Wasserstau ist jedoch nur unvollkommen und führt somit auch nicht zur gewünschten Verbesserung.

Durch die DE-A-23 56 211 wird vorgeschlagen, in die Mischkammer der Steuerplatte eine Art Membran einzusetzen, die eine Volumenvergrößerung des Mischraumes zuläßt. Diese Membran befindet sich dabei in einem gewissen Abstand zum Boden der Mischkammer, in dessen Richtung sie sich ausdehnen kann und weist ebenso einen Abstand zur Wassereintrittsöffnung der Ventilsitzplatte auf. Auch hier ist gerade im kritischen Bereich, also im Bereich der kleinen Wassermengen, die Geräuschdämmung sehr unvollkommen.

Auch die DE-A-23 56 327 betrifft ein sanitäres Wasserventil, das einen Oberflächenkanal für Umlenkfunktionen aufweist, in dem sich ein schalldämpfende Eigenschaften aufweisender Körper befindet. Dieser Körper bedeckt den Boden des Oberflächenkanals und ist als gasdicht verschlossener Hohlkörper ausgeführt, dessen dem Oberflächenkanal abgewandte Seite nach außen gewölbt ist. Der Rand des Körpers liegt fest an den Seitenwandungen des Oberflächenkanales an, die dem Boden des Oberflächenkanals abgewandte Seite des Körpers kann jedoch federn. Es ergibt sich dadurch analog der DE-A-23 56 211 eine Membran, die im Abstand von den Wasserein- und -austrittsbohrungen angeordnet ist und damit gerade im kritischen Bereich, also im Bereich der kleinen Wassermengen nicht zu einer Geräuschdämmung führt.

Aus der DE-A-24 36 042 ist eine Ventilkegeldichtung für Absperrhähne bekannt, die praktisch keine Geräuschentwicklung hervorrufen soll. Absperrhähne mit Ventilkegeldichtungen verweisen gegenüber den bisher beschriebenen Ventilen eine völlig andere Konstruktion insofern auf, als hier die Dichtung nicht durch das Verschieben zweier Platten aufeinander erfolgt, sondern durch einen nach oben abzuhebenden Ventilkegel, der vermittels einer Schraube nach oben zur Freigabe des Durchflusses oder nach unten auf den Ventilsitz zum Absperren des Durchflusses bewegt wird. Im teilgeöffneten Zustand eines solchen Absperrhahnes entsteht auf Grund des dadurch hervorgerufenen Druckabfalles eine Pumpbewegung der Ventilkegeldichtung, die zu einer Geräuschbildung führt, was durch Einsatz eines elastischen Werkstoffes in Verbindung mit einer bestimmten Formgebung der Ventilkegeldichtung vermieden werden kann. Bei Hebelmischern, die mit ständig aufeinanderliegenden Dichtscheiben arbeiten, tritt auf Grund der anderen Konstruktion das Problem, das der DE-A-24 36 042 zu Grunde liegt, nicht auf, da hier die Abdichtung durch Verdrehen von aufeinanderliegenden Keramikscheiben gelöst wird, die sich nicht voneinander entfernen.

Keiner der vorgenannten Vorschläge hat sich somit als wirklich brauchbar erwiesen. In der Praxis führte nur die Anordnung von Sieben, wie sie beispielsweise in der DE-A-23 49 772 ; DE-A-23 56 326 ; DE-A-26 22 179 ; DE-A-26 26 386 beschrieben werden, zum gewünschten Erfolg. Das Wasser passiert dabei die Siebe, wodurch eine Schwingungsdämpfung erfolgt und damit die gewünschte Geräuschverminderung. Der Einsatz von Sieben weist jedoch einen erheblichen Nachteil auf, weil es bisher praktisch unmöglich ist, das Leitungsnetz der Wasserversorgung völlig frei von Fremdstoffen zu halten. In die zunächst vollwirksamen Siebpakete werden im Laufe relativ kurzer Zeit die im Rohrnetz vorhandenen Verunreinigungen, d.h. im wesentlichen Kalkablagerungen, sowie Rost gespült, wodurch sich diese Siebpakete zusetzen, was nicht nur dazu führt, daß die erstrebte Geräuschdämmung verloren geht, sondern in vielen Fällen eine Verringerung der Durchflußleistung des Ventiles bis zum endgültigen Verstopfen auftritt.

Der Erfindung liegt daher die Aufgabe zu Grunde, die Nachteile der bekannten Geräuschdämmungsverfahren zu vermeiden, d.h. ein Ventil zu schaffen, das sich nicht zusetzt und über eine lange Lebensdauer hinweg gute Geräuschdämmungseigenschaften aufweist. Ein weiteres Ziel der Erfindung ist es, die dafür benötigten Einbauten so preiswert wie möglich auszuführen, d.h. die Kosten für die bisher erforderlichen Siebpakete noch weitgehend zu senken und ihre Montage zu vereinfachen.

Diese Aufgabe wird gelöst durch ein Ventil, bei dem die Steuerung eines oder mehrerer Flüssigkeitsströme durch ständig miteinander in Eingriff stehende, mindestens eine Ein- und eine Auslaßöffnung aufweisende, Ventilplatten erfolgt, denen eine Umlenk- oder Mischkammer zugeordnet ist, die einen geräuschdämpfenden Körper enthält, mit dem kennzeichnenden Merkmal, daß der geräuschdämpfende Körper eine in der Umlenk- oder Mischkammer beweglich gelagerte Geräuschdämmscheibe ist, die mittels Federkraft mindestens auf die Einlaßöffnung, bzw. -öffnungen gedrückt wird und diese verschließt.

Die Geräuschdämmscheibe bildet also eine federnde Abdichtung der Einlaßöffnung, die nur durch den Druck des Flüssigkeitsstromes, also bei Sanitärarmaturen durch das Wasser angehoben werden kann. Erst nach diesem Anheben ist eine Verbindung mit der Auslaßöffnung gegeben, wobei das Anheben auf Grund des federnden Andruckes dem geöffneten Querschnitt der Einlaßöffnung entspricht. Der zum Fließen des Wasserstromes zur Verfügung stehende Platz wird also automatisch durch den Öffnungsgrad des Ventiles bestimmt, d.h. daß auch bei minimaler Öffnung stets eine Dämmung des Wasserstromes und damit eine Dämpfung des Fließgeräusches erreicht wird.

Diese sich automatisch einstellende Verbindung zwischen Einlaßöffnung und Auslaßöffnung wird dabei durch eine einfache Scheibe bewirkt, die federnd angedrückt wird. Das Bauteil ist also ausgesprochen einfach und muß im Gegensatz zu den Siebpaketen nicht vom Wasser durchströmt werden. Dadurch ist gleichzeitig sichergestellt, daß ein Zusetzen, wie bei Siebpaketen üblich, nicht erfolgen kann. Die im Wasserstrom auftretenden Verunreinigungen wie Sand, Rost, Kalk usw. können sich nicht anlagern, sondern werden mit dem Wasserstrom fortgespült. Es reicht bereits, die Geräuschdämmscheibe in einer Größe auszuführen, daß lediglich die Einlaßöffnung, bzw. die Einlaßöffnungen, wenn es sich um ein Mischventil handelt, damit abgedeckt werden. Eine bevorzugte Ausgestaltung der Erfindung sieht jedoch vor, daß die Geräuschdämmscheibe die Einlaß- und die Auslaßöffnung verschließt.

Diese Ausgestaltung ist insbesondere dann vorteilhaft, wenn die Armaturen nur kleine Abmessungen aufweisen und sich die Geräuschdämmscheibe in einer Misch- oder Umlenkkammer befindet, die durch eine Ventilplatte gebildet wird. Desweiteren ergibt sich dadurch eine größere Staufläche. Eine bevorzugte Ausgestaltung der Erfindung sieht vor, daß die den Öffnungen in der Ventilplatte gegenüberliegenden Seite der Geräuschdämmscheibe eine rauhe Oberfläche aufweist. Trotz der rauhen Oberfläche ist dabei eine saubere Abdichtung der Öffnungen in der Ventilplatte noch gegeben, jedoch bewirkt die rauhe Oberfläche der Ge-

räuschdämmscheibe auch bei minimaler durchtretender Strömung eine Wirbelbildung an der Geräuschdämmscheibe, so daß mit hoher Sicherheit auch bei kleinen Durchtrittsmengen Strömungsgeräusche verhindert werden.

Eine sehr zweckmäßige Ausgestaltung der Erfindung sieht vor, daß die Geräuschdämmscheibe mit Nasen versehen ist, die in die Einlaßöffnung, bzw. -öffnungen eingreifen. Durch das Eingreifen der Nasen in die Einlaßöffnung, bzw. Einlaßöffnungen, ist eine Fixierung der Geräuschdämmscheibe möglich, d.h. daß keine besonderen Maßnahmen ergriffen werden müssen, um die Geräuschdämmscheibe in der gewünwchten Position zu lagern, wobei durch die Länge der Nase gewährleistet ist, daß beim möglichen Hub der Geräuschdämmscheibe, diese stets noch in der Einlaßöffnung geführt wird.

Eine besonders vorteilhafte Ausgestaltung der Erfindung sieht vor, daß die Nasen der Geräuschdämmscheibe sich in Richtung der Ventilplatte verjüngen. Durch die Verjüngung der Nasen, die also die Form einer Art Kegelstumpf aufweisen, vergrößert sich die Menge des durchtretenden Wassers bei steigendem Hub so, wie das der stetig zunehmenden Öffnung des Ventiles bei Betätigung des Ventilhebels entspricht. Die Nasen behindern damit nicht den Fluß des Wasserstromes, beginnen aber bereits mit seiner Umlenkung vor dem Durchtritt durch die Steuerscheibe, was zu einer weiteren Dämmung der Schwingungsgeräusche führt.

Der Andruck der Geräuschdämmscheibe an die Ventilplatte erfolgt zweckmäßig durch ein elastisches Material. Als elastisches Material kommen dabei praktisch alle Materialien in Betracht, die kompressibel sind. Es ist also sowohl möglich, die Geräuschdämmscheibe mit einem Stück Moosgummi zu hinterlegen als auch federnde Schaumstoffkissen oder luftgefüllte Kissen einzusetzen, durch die die erforderliche Andruckkraft auf die Geräuschdämmscheibe aufgebracht wird.

Zweckmäßig kann der Andruck der Geräuschdämmscheibe an die Ventilplatte auch durch eine Feder erfolgen. Die Feder sollte in diesem Falle jedoch aus rostfreiem Stahl bestehen und kann sowohl als Tellerfeder wie auch als normale Druck- oder Blattfeder ausgeführt sein. Gegenüber dem Einsatz von porösen andrückenden elastischen Materialien ergibt sich bei Einsatz der Federn der Vorteil, daß hier ein Zusetzen, wie es bei porigem Schaumgummi usw. auftreten könnte, nicht erfolgen kann, d.h. daß die Einsatzdauer bei der Wahl von Federn verlängert ist.

Besonders zweckmäßig ist es, wenn die Geräuschdämmscheibe mit federnden Füßen versehen ist. Durch diese Ausgestaltung der Erfindung entsteht ein einziges Bauteil, das in die Mischkammer bzw. die Umlenkkammer eingebracht werden muß, wodurch die Montage sehr vereinfacht wird. Gleichzeitig ist es möglich, durch die Wahl und die Art der Anordnung, sowie die Stärke der Füße, den Anpreßdruck der Geräuschdämmscheibe festzulegen. Die Geräuschdämmscheibe selbst besteht dabei zweckmäßigerweise aus Kunststoff, ist also ein relativ billiges Spritzteil aus beispielsweise Polyamid. Bei der Ausführung der Geräuschdämmscheibe aus Kunststoff ist es möglich, die Füße gleich mit anzuspritzen und durch ihre Formgebung dafür zu sorgen, daß der erforderliche Anpreßdruck erreicht wird.

Eine bevorzugte Ausgestaltung der Erfindung sieht vor, daß die Geräuschdämmscheibe aus natürlichem oder synthetischem Kautschuk besteht. Bei der Fertigung der Geräuschdämmscheibe aus natürlichem oder synthetischem Kautschuk fallen auch nur geringe Kosten an, d.h. daß es sich auch hier um ein billiges Massenteil handelt. Gegenüber anderen Materialien weist jedoch Kautschuk eine wesentlich höhere Geräuschdämmfähigkeit auf, besitzt außerdem den großen Vorteil, daß er, wie auch der Kunststoff, korrosionsbeständig ist, wobei zusätzlich durch die Wahl und gegebenenfalls Kombination verschiedener Kautschuksorten sich die Härte der Geräuschdämmscheibe ebenso wie die Andruckkraft durch die Ausgestaltung der federnden Füße frei wählen läßt.

Die Wahl von Kautschuk als Material der Geräuschdämmscheibe gestattet desweiteren eine Blattfeder, Tellerfeder oder Spiralfeder direkt mit der Geräuschdämmscheibe zusammen zu vulkanisieren und auf diese Art ein einziges Einbauteil zu erhalten. Die vorteilhafteste Ausführungsform dürfte jedoch in einer Geräuschdämmscheibe mit angeformter Feder bestehen, wobei die Feder gegebenenfalls in Form einer Blattfeder aus dem gleichen Kautschukmaterial wie die Geräuschdämmscheibe besteht.

Die Rohrleitungssätze, an die die Sanitärarmaturen, also die Ventile angeschlossen werden, weisen, abhängig von der Lage der jeweiligen Anschlußstelle, unterschiedliche Wasserdrücke auf. Bei einem hohen Wasserdruck würde also auch bei nur geringer Öffnung des Ventiles dieser hohe Wasserdruck voll auf die Geräuschdämmscheibe wirken, ohne daß die Möglichkeit bestände, den vorgesehenen federnden Andruck der Geräuschdämmscheibe auf die Einlaßöffnungen zu steuern, bzw. stets eine konstante Druckdifferenz zwischen Wasserdruck und Gegendruck durch die Geräuschdämmscheibe aufrechtzuerhalten. Um nicht eine Vielzahl von federnden Andruckmöglichkeiten schaffen zu müssen, durch die das Ventil den jeweiligen Druckanforderungen angepaßt werden könnte, sieht eine besondere bevorzugte Ausgestaltung der Erfindung vor, daß die Geräuschdämmscheibe im Bereich der Einlaßöffnung, bzw. Einlaßöffnungen der Ventilplatte, mit mindestens einer Ausgleichsbohrung versehen ist. Diese Ausgleichsbohrung erstreckt sich durch die Geräuschdämmscheibe hindurch in den hinter ihr liegenden Raum der Misch- oder Umlenkkammer, wodurch bei Öffnen des Ventiles dieser Raum praktisch in's Druckgleichgewicht mit dem Raum vor der Geräuschdämmscheibe, also der Einlaßöffnung gebracht wird. Die zunächst vorhandene Druckdifferenz wird dadurch angepaßt, so daß mit ein und derselben Andruckkraft bei allen Ventilen gearbeitet werden kann und diese für einen weiten Druckbereich ausgelegt sind.

Statt des Einbringens einer Ausgleichsbohrung in die Geräuschdämmscheibe sieht eine andere zweckmäßige Ausgestaltung der Erfindung vor, die Geräuschdämmscheibe im Bereich der Einlaßöffnung, bzw. Einlaßöffnungen der Ventilplatte mit Leitkanälen zu versehen. Der oder die Leitkanäle erstrecken sich dabei von der der Einlaßöffnung der Ventilplatte zugekehrten Seite der Geräuschdämmscheibe über ihren Umfang hinweg zur Gegenseite, so daß auch in diesem Fall ein Druckausgleich stattfinden kann. Die Anordnung von Leitkanälen statt der Ausgleichsbohrung dürfte immer dann zweckmäßig sein, wenn besonders mit stark verunreinigtem Wasser zu rechnen ist, so daß die Gefahr des Zusetzens der Ausgleichsbohrung besteht.

Eine weitere vorteilhafte Ausgetaltung der Erfindung sieht vor, daß die Geräuschdämmscheibe auch im Bereich der Auslaßöffnung mit Ausgleichsbohrungen und/oder Leitkanälen ausgerüstet ist, wobei die Summe der Querschnitte dieser Auslaßmöglichkeiten größer als die Summe der Querschnitte der Ausgleichsbohrungen, bzw. Leitkanäle, im Bereich der Einlaßöffnung ist. Das Einbringen dieser Ausgleichsmöglichkeit ist dann sinnvoll, wenn die Geräuschdämmscheibe die Umlenk-bzw. Mischkammerzum Boden hin relativ gut abdichtet, so daß auf keine andere Art und Weise ein Ausgleich des Druckes stattfinden kann. Dadurch wird vermieden, daß sich der gleiche Druck, der sich vor der Geräuschdämmscheibe bei geöffnetem Ventil befindet, auch hinter der Geräuschdämmscheibe aufbauen kann und so die Funktion der Geräuschdämmscheibe, bzw. des Ventiles, beeinträchtigt. Die Erfindung wird nachstehend an Hand der Zeichnungen beschrieben :

Figur 1 zeigt als Seitenansicht ein Mischventil im Schnitt,

Figure 2, 4 und 6 zeigen den Einsatz eines Mischventiles in der Seitenansicht im Schnitt,

Figure 3, 5 und 7 zeigen die Draufsicht auf einen Mischventileinsatz im Schnitt,

Figure 8, 9 zeigen die Seitenansicht eines Regelventileinsatzes im Schnitt.

In das Ventilgehäuse 1 eines Mischventiles für eine Waschtischarmatur ist eine Kartusche 2 eingesetzt, in der die Ventilsitzscheibe 9 und die Ventilsteuerscheibe 8 angeordnet sind und als solche komplette Einheit leicht ausgetauscht werden können.

Das zu mischende heiße und kalte Wasser tritt durch Öffnungen in der Ventilsitzscheibe 9 hindurch und erreicht die Ventilsteuerscheibe 8 an der Einlaßöffnung 10 für Kaltwasser, bzw. Einlaßöffnung 10' für Heißwasser und ist durch die Geräuschdämmscheibe 4, die sich in der Mischkammer 3 oder bei Regulierventilen in der Umlenkammer 16 befindet, abgedeckt. Die Mischkammer 3 wird von einem Steuerkopf 6 gebildet, der über einem Dichtring 5 dichtschließend an der Ventilsteuerscheibe 8 anliegt. Die Geräuschdämmscheibe 4, die in der Mischkammer 3 angeordnet ist, wird durch Füße 7 gegen die Ventilsteuerscheibe 8 gepreßt und beim Öffnen der Wassereinlaßöffnung 10 durch den Wasserdruck angehoben. Im Bereich der Wassereinlaßöffnung 10 der Ventilsteuerscheibe 8 weist die Geräuschdämmscheibe 4 eine Ausgleichsbohrung 12 auf, die zum Druckabbau dient. Sobald die Ventilsteuerscheibe 8 in eine Position gebracht worden ist, bei der das Wasser durch die Ventilsitzscheibe 9 die Einlaßöffnung 10 in der Ventilsteuer scheibe 8 erreicht, strömt durch den freien Querschnitt der Ausgleichsbohrung 12 Wasser in den oberen Bereich der Mischkammer 3, der über die Entlastungsbohrung 21 mit der Auslaßöffnung 11 verbunden ist, wodurch es zu einer Druckentlastung kommt. Die wesentliche Menge des durch die Einlaßöffnung 10 strömenden Wassers passiert unter der Geräuschdämmscheibe 4 her zu den Bohrungen 12, 21, um die Auslaßöffnung 11 zu erreichen. Die Füße 7, die direkt an der Geräuschdämmscheibe 4 angeformt sind, bestehen aus einem elastisch verformbaren Material und werden durch den auftretenden Wasserdruck zusammengedrückt. Dadurch vergrößert sich der Abstand zwischen der Geräuschdämmscheibe 4 und der Ventilsteuerscheibe 8, so daß der Wasserstrom von der Einlaßöffnung 10 zur Auslaßöffnung 11 fließen kann. Der Steuerkopf 6, der die Mischkammer 3 oder die Umlenkkamer 16 enthält, besteht in vielen Fällen aus Kunststoff, ist also beispielsweise ein Polyamidspritzteil. Wie die Fig. 9 zeigt, kann der Steuerkopf 6 jedoch auch als Keramikteil ausgeführt und über Nocken 22 mit der Ventilsteuerscheibe 8 verbunden werden. Die Geräuschdämmscheibe 4 wird gemäß der Fig. 9 durch eine Spiralfeder 14″ angedrückt, die aus nichtrotendem Stahl besteht. Die Ausgleichsbohrung 12 der Geräuschdämmscheibe 4 ist durch die Nase 13 geführt. Die Nase 13 ragt in die Einlaßöffnung 10 hinein, wodurch die Geräuschdämmscheibe 4 verdrehsicher in der Mischkammer 3 gehalten ist.

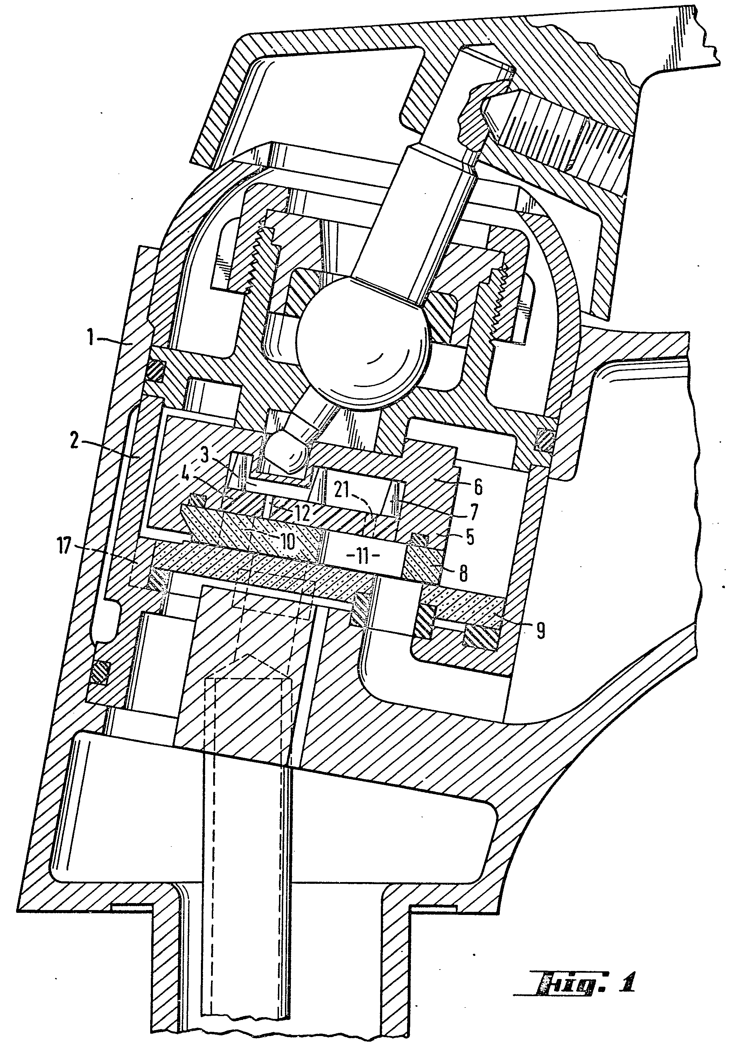

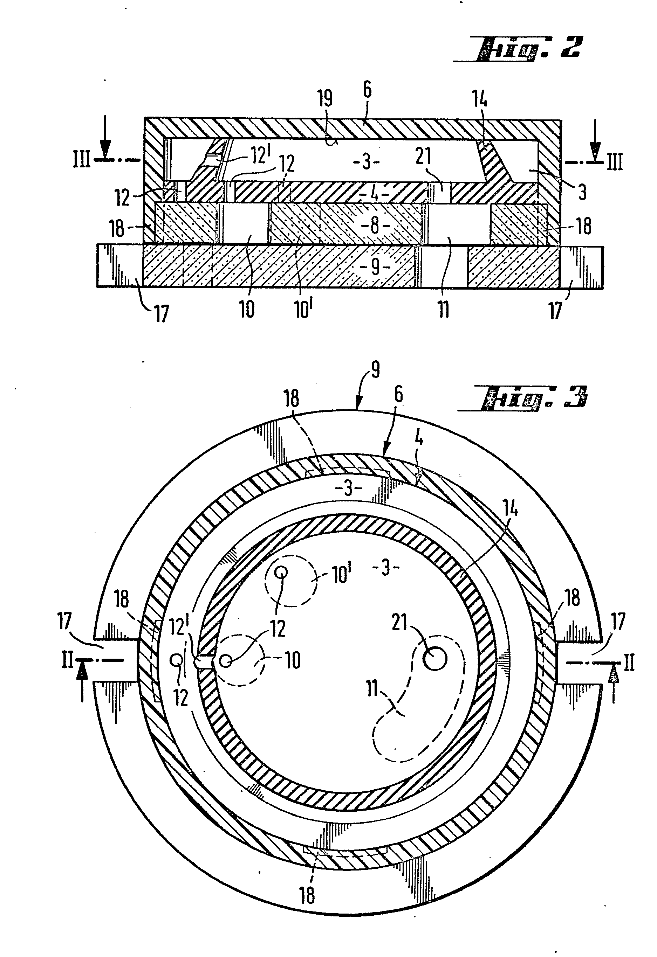

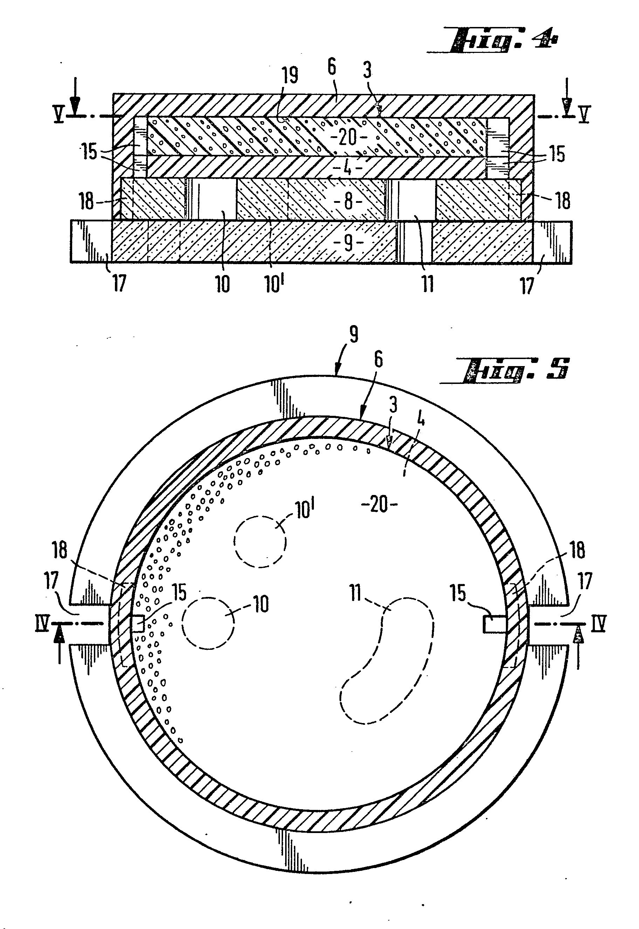

Statt der Spiralfeder 14″ kann, wie die Fig. 8 und die Fig. 2 und 3 zeigen, auch eine Tellerfeder angeordnet werden. Im Falle der Fig. 8 handelt es sich dabei um eine Doppeltellerfeder 14', die aus einem nichtrostenden Metall ausgeführt wurde. Bei den Fig. 2 und 3 ist die Feder 14 integrales Teil der Geräuschdämmscheibe 4, besteht wie diese aus einem synthetischen Gummi und liegt als Ring am Boden 19 der Mischkammer 3 an. Da die Mischkammer 3 dadurch in ihrem oberen Bereich in zwei geschlossene Räume unterteilt ist, weist die Geräuschdämmscheibe 4 drei Ausgleichsbohrungen 12 auf, von denen sich zwei im Innen- und eine im Außenbereich befindet. Zusätzlich ist die Feder 14 mit einer Ausgleichsbohrung 12' versehen, um den Druckausgleich zwischen innerem und äußerem Bereich herzustellen.

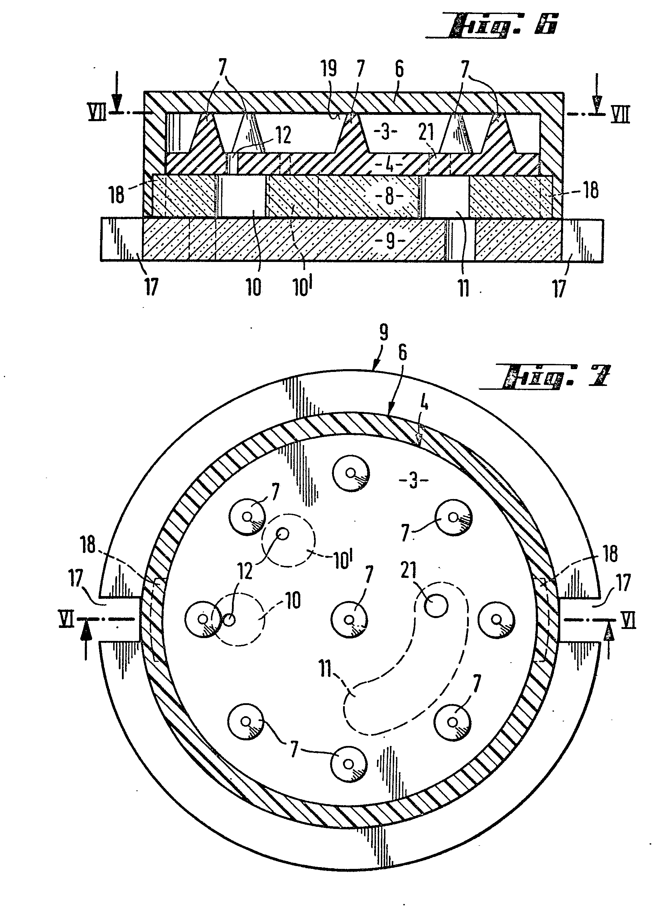

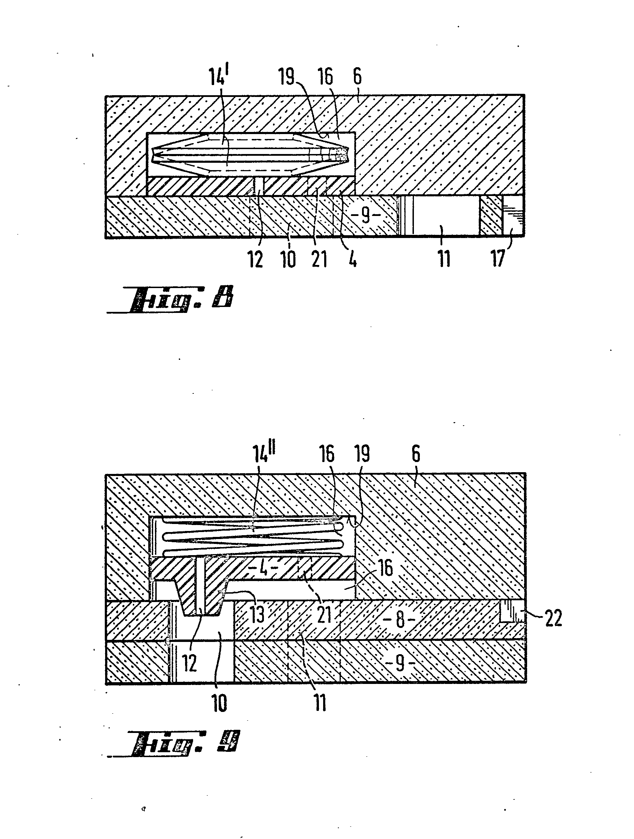

Bei den Figuren 4 und 5 ist als Feder 14 ein kompressibles Material eingesetzt, das aus einem geschlossenzelligen Schaumstoff 20 besteht. Statt einer Ausgleichsbohrung 12 weist die Geräuschdämmscheibe 4 zwei Leitkanäle 15 auf, die sich an der Peripherie der Geräuschdämmscheibe 4 befinden und auch den Schaumstoff 20 durchdringen. Diese Leitkanäle 15 dienen ebenso wie die Ausgleichsbohrung, zur Druckentlastung.

Die Ventilsitzscheibe 9 weist Aussparungen 17 auf, um sie gegen Verdrehung zu sichern. In die Aussparungen 17 greifen nichtdargestellte Nocken ein, die sich in der Kartusche 2 befinden. Die Ventilsitzscheibe 9 wird dadurch sicher in der Kartusche 2 gehalten.

## Ansprüche

1. Ventil, bei dem die Steuerung eines oder mehrerer Flüssigkeitsströme durch ständig miteinander in Eingriff stehende, mindestens eine Ein- und eine Auslaßöffnung aufweisende Ventilplatten (8,9) erfolgt, denen eine Umlenk (16)- oder Mischkammer (3) zugeordnet ist, die einen geräuschdämpfenden Körper enthält, dadurch gekennzeichnet, daß der geräuschdämpfende Körper eine in der Umlenk- (16) oder Mischkammer (3) beweglich gelagerte Geräuschdämmscheibe (4) ist, die mittels Federkraft mindestens auf die Einlaßöffnung bzw. -öffnungen (10) gedrückt wird und diese verschließt.

2. Ventil nach Anspruch 1, dadurch gekennzeichnet, daß die Geräuschdämmscheibe (4) die Auslaß (11) und Einlaßöffnungen (10) mittels Federkraft verschließt.

3. Ventil nach einem der Ansprüche 1 oder 2, dadurch gekennzeichnet, daß die den Öffnungen (10, 11) in der Ventilplatte gegenüberliegende Seite der Geräuschdämmscheibe (4) eine rauhe Oberfläche aufweist.

4. Ventil nach einem der Ansprüche 1 bis 3, dadurch gekennzeichnet, daß die Geräuschdämmscheibe (4) mit Nasen (13) versehen ist, die in die Einlaßöffnung (10) bzw. -öffnungen eingreift.

5. Ventil nach Anspruch 4, dadurch gekennzeichnet, daß die Nasen (13) der Geräuschdämmscheibe (4) sich in Richtung der Ventilplatte verjüngen.

6. Ventil nach einem der Ansprüche 1 bis 5, dadurch gekennzeichnet, daß der Andruck der Geräuschdämmscheibe (4) an die Ventilplatte durch ein elastisches Material erfolgt.

7. Ventil nach einem der Ansprüche 1 bis 5, dadurch gekennzeichnet, daß der Andruck der Geräuschdämmscheibe (4) an die Ventilplatte durch eine Feder (14', 14'') erfolgt.

8. Ventil nach Anspruch 7, dadurch gekennzeichnet, daß die Feder (14'') aus nichtrostendem Stahl besteht.

9. Ventil nach einem der Ansprüche 1 bis 8, dadurch gekennzeichnet, daß die Geräuschdämmscheibe (4) aus Kunststoff besteht.

10. Ventil nach einem der Ansprüche 1 bis 8, dadurch gekennzeichnet, daß die Geräuschdämmscheibe (4) aus natürlichem oder synthetischem Kautschuk besteht.

11. Ventil nach einem der Ansprüche 1 bis 10, dadurch gekennzeichnet, daß die Geräuschdämmscheibe (4) im Bereich der Einlaßöffnung (10) bzw. Einlaßöffnungen der Ventilplatte mit Leitkanälen (15) versehen ist.

12. Ventil nach einem der Ansprüche 1 bis 11, dadurch gekennzeichnet, daß die Geräuschdämmscheibe (4) im Bereich der Einlaßöffnungen (10) mit mindestens einer Ausgleichsbohrung (12) versehen ist.

13. Ventil nach den Ansprüchen 11 und 12, dadurch gekennzeichnet, daß die Geräuschdämmscheibe (4) im Bereich der Auslaßöffnung (11) mit Leitkanälen (15) und/oder Ausgleichsbohrungen (21) versehen ist, wobei der gesamte Querschnitt der Ausgleichs bohrungen (21) bzw. der Leitkanäle (15) im Bereich der Auslaßöffnung (11) größer als der Querschnitt der Ausgleichsbohrungen (12), bzw. der Leitkanäle (15) im Bereich der Einlaßöffnung (10) ist.

14. Ventil nach einem der Ansprüche 1 bis 12, dadurch gekennzeichnet, daß die Geräuschdämmscheibe (4) mit federnden Füßen (7) versehen ist.

## Claims

1. Valve in which the control of one or more currents of liquid is effected by valve plates (8, 9) which are permanently engaged with one another and have at least one inlet opening and one outlet opening and to which there is assigned a deflection chamber (16) or mixing chamber (3) which contains a noise-damping element, characterised in that the noise-damping element is a noise-damping disc (4) which is movably mounted in the deflection chamber (16) or mixing chamber (3) and which is pressed under a spring force at least onto the inlet opening or openings (10) and closes the opening(s).

2. Valve according to claim 1, characterised in that the noise-damping disc (4) closes the outlet openings (11) and inlet openings (10) under a spring force.

3. Valve according to claim 1 or 2, characterised in that the side of the noise-damping disc (4) that is opposite the openings (10, 11) in the valve plate has a rough surface.

4. Valve according to any one of claims 1 to 3, characterised in that the noise-damping disc (4) is provided with projections (13) which engage in the inlet opening (10) or openings.

5. Valve according to claim 4, characterised in that the projections (13) of the noise-damping disc (4) taper in the direction towards the valve plate.

6. Valve according to any one of claims 1 to 5, characterised in that the pressing of the noise-damping disc (4) against the valve plate is effected by means of an elastic material.

7. Valve according to any one of claims 1 to 5, characterised in that the pressing of the noise-damping disc (4) against the valve plate is effected by means of a spring (14', 14'').

8. Valve according to claim 7, characterised in that the spring (14") consists of stainless steel.

9. Valve according to any one of claims 1 to 8, characterised in that the noise-damping disc (4) consists of plastics material.

10. Valve according to any one of claims 1 to 8, characterised in that the noise-damping disc (4) consists of natural or synthetic caoutchouc.

11. Valve according to any one of claims 1 to 10, characterised in that in the region of the inlet opening (10) or inlet openings in the valve plate, the noise-damping disc (4) is provided with guide channels (15).

12. Valve according to any one of claims 1 to 11, characterised in that in the region of the inlet openings (10), the noise-damping disc (4) is provided with at least one compensating bore (12).

13. Valve according to claims 11 and 12, characterised in that in the region of the outlet opening (11), the noise-damping disc (4) is provided with guide channels (15) and/or compensating bores (21), the total cross-section of the compensating bores (21), the total cross-section of the compensating bores (21) and/or guide channels (15) in the region of the outlet opening (11) being greater than the cross-section of the compensating bores (12) and/or guide channels (15) in the region of the inlet opening (10).

14. Valve according to any one of claims 1 to 12, characterised in that the noise-damping disc (4) is provided with resilient supports (7).

## Revendications

1. Valve dans laquelle la commande d'un ou de plusieurs courants de liquide est effectuée par des disques (8, 9) qui sont constamment en prise l'un avec l'autre, qui comportent au moins une ouverture d'entrée et une ouverture de sortie et auxquels est associée une chambre de renvoi (16) ou une chambre de mélange (3) contenant un élément amortissant le bruit, caractérisée par le fait que l'élément amortissant le bruit est un disque (4) qui est monté mobile dans la chambre de renvoi (16) ou la chambre de mélange (3) et qui est appliqué élastiquement au moins sur la ou les ouvertures d'entrée (10) et ferme cette ou ces ouvertures.

2. Valve selon la revendication 1, caractérisée par le fait que le disque d'amortissement du bruit (4) ferme élastiquement les ouvertures de sortie (11) et les ouvertures d'entrée (10).

3. Valve selon une des revendications 1 ou 2, caractérisée par le fait que la face du disque d'amortissement du bruit (4) opposée aux ouvertures (10, 11) du disque de valve présente une surface rugueuse.

4. Valve selon l'une des revendications 1 à 3, caractérisée par le fait que le disque d'amortissement du bruit (4) est muni de becs (13) qui s'engagent dans l'ouverture ou les ouvertures d'entrée (10).

5. Valve selon la revendication 4, caractérisée par le fait que les becs (13) du disque d'amortissement du bruit (4) vont en s'amincissant en direction du disque de valve.

6. Valve selon l'une des revendications 1 à 5, caractérisée par le fait que la pression qu'exerce le disque d'amortissement du bruit (4) sur le disque de valve est produite par un matériau élastique.

7. Valve selon l'une des revendications 1 à 5, caractérisée par le fait que la pression qu'exerce le disque d'amortissement du bruit (4) sur le disque de valve est produite par un ressort (14', 14").

8. Valve selon la revendication 7, caractérisée par le fait que le ressort (14") est en acier inoxydable.

9. Valve selon l'une des revendications 1 à 8, caractérisée par le fait que le disque d'amortissement du bruit (4) est en matière plastique.

10. Valve selon l'une des revendications 1 à 8, caractérisée par le fait que le disque d'amortissement du bruit (4) est en caoutchouc naturel ou synthétique.

11. Valve selon l'une des revendications 1 à 10, caractérisée par le fait que le disque d'amortissement du bruit (4) dans la zone de la ou des ouvertures d'entrée (10) du disque de valve est muni de canaux (15).

12. Valve selon l'une des revendications 1 à 11, caractérisée par le fait que le disque d'amortissement du bruit (4) dans la zone des ouvertures d'entrée (10) est muni d'au moins un perçage d'équilibrage (12).

13. Valve selon les revendications 11 et 12, caractérisée par le fait que le disque d'amortissement du bruit (4) dans la zone de l'ouverture de sortie (11) est muni de canaux (15) et/ou de perçages d'équilibrage (21), la section transversale totale des perçages d'équilibrage (21) ou des canaux (15) dans la zone de l'ouverture de sortie (11) étant plus grande que la section transversale des perçages d'équilibrage (12) ou des canaux (15) dans la zone de l'ouverture d'entrée (10).

14. Valve selon l'une des revendications 1 à 12, caractérisée par le fait que le disque d'amortissement du bruit (4) est muni de pieds élastiques (7).

*Fig. 1*

*Fig. 2*

*Fig. 3*

Fig. 4

Fig. 5

Fig. 6

Fig. 7

Fig. 8

Fig. 9